# DEMANDE DE BREVET EUROPEEN

(11) **EP 1 793 605 A1**
(43) Date de publication de la demande: **06.06.2007**
(21) Numéro de dépôt: 06301183.7
(22) Date de dépôt: 27.11.2006
(51) Int. Cl.: H04N 7/173

(54) **Procédé de fourniture sur demande de menus interactifs à des terminaux couplés à un réseau de communication**

(30) Priorité: 30.11.2005 FR 0553645
(71) Demandeur: Alcatel Lucent, 75008 Paris (FR)
(72) Inventeur: Squedin, Sylvain, 91620 NOZAY (FR); Papillon, Serge, 75014 PARIS (FR); Martinot, Olivier, 91210 DRAVEIL (FR)
(74) Mandataire: Korakis-Ménager, Sophie

(57) **Abrégé**

Un procédé est dédié à la fourniture de menus interactifs à la demande d'un terminal de communication d'utilisateur (T1), via un réseau de communication bidirectionnelle (R1). Ce procédé consiste en cas de diffusion par un terminal (T1, T') d'un contenu transmis par le réseau (R1) sur une voie aller, i) à activer une fonction dédiée dans un terminal de communication (T1) de manière à transmettre au réseau (R1), via une voie bidirectionnelle de retour, une requête demandant la transmission d'un menu interactif en relation avec le contenu diffusé, ii) à réception de cette requête, à accéder à des premiers moyens de mémorisation (BD) dans lesquels sont stockées des premières données en relation avec le contenu diffusé, iii) à générer un menu interactif à partir d'au moins les premières données relatives au contenu diffusé, et iv) à transmettre le menu interactif généré au terminal requérant (Ti) via la voie de retour du réseau (R1) de sorte qu'il puisse l'afficher et que son utilisateur puisse sélectionner l'un au moins des éléments qu'il contient.

## Description

L'invention concerne les réseaux de communication fixe ou mobile capables de transmettre des contenus et des menus interactifs associés à des terminaux de communication afin qu'ils soient affichés sur leur écran.

On entend ici par « contenu » des ensembles volumineux de données définissant un programme de télévision ou de vidéo ou audio (radiophonique ou musical) ou de jeux ou multimédia ou encore un fichier informatique (ou « data »).

Par ailleurs, on entend ici par « réseau de communication » tout type de réseau de communication capable de transmettre par voie filaire ou par voie d'ondes, sur des voies de communication dites « aller », des contenus à des terminaux de communication qui sont couplés à lui, et d'échanger avec ces mêmes terminaux de communication des données ou des messages sur des voies de communication bidirectionnelle (aller/retour), dites « voies de retour » (ou « back channel »). Tout mode de transmission de contenu peut être envisagé, et notamment le mode point-à-point (ou « unicast ») ou le mode point-à-multipoints (ou « multicast »), ou encore le mode diffusion (ou « broadcast »). Il pourra par exemple s'agir d'un réseau de communication fixe comportant des lignes de transmission de données bidirectionnelles à moyen ou haut débit, tels que des câbles (ou fibres optiques) ou des lignes xDSL, ou d'un réseau de téléphonie mobile (ou cellulaire), éventuellement à relais satellitaire(s).

En outre, on entend ici par « terminal de communication » tout type d'équipement de communication capable de recevoir des contenus d'un réseau du type précité et d'échanger des données, messages et requêtes avec ce même réseau de communication. Il pourra par exemple s'agir d'un téléphone mobile (ou cellulaire), d'un assistant personnel numérique (ou PDA), d'un décodeur de programmes de télévision ou vidéos cryptés, d'un équipement de réception de programmes de télévision de type « Set-top box », d'un équipement de réception de programmes vidéos ou musicaux, ou d'un ordinateur fixe ou portable, ou d'un équipement embarqué dans un véhicule (voiture, camion, bus, train, et analogues).

Certains diffuseurs de contenus souhaitent interagir avec leurs clients pour mettre à leur disposition des informations et/ou fonctions complémentaires relatives aux contenus qu'ils leur transmettent et/ou pour connaître leur avis sur ces contenus. Pour ce faire, les diffuseurs intègrent dans les données des contenus qu'ils transmettent à leurs clients des données d'interactivité qui proposent à des instants prédéfinis des services interactifs, éventuellement sous forme de menus. Ainsi, un client qui regarde (ou écoute) un contenu reçu au moyen de son terminal, via le réseau de communication auquel il est couplé, peut être invité par un message dédié, à un instant donné, à voter, ou à télécharger une sonnerie de téléphone ou une oeuvre musicale ou cinématographique, ou encore à visionner un ralenti.

Ce mode d'interaction présente au moins trois inconvénients : d'une première part il impose aux clients des messages interactifs pendant la diffusion d'un contenu, ce qui peut nuire à leur confort, d'une deuxième part il ne met les services interactifs à la disposition des clients qu'à des instants prédéfinis et non quand ils en ont réellement besoin ou envie, et d'une troisième part (et à un moindre niveau) il n'offre que des services interactifs qui sont censés correspondre à un profil moyen de client, et non des services personnalisés.

L'invention a donc pour but d'améliorer la situation en permettant de fournir aux clients des diffuseurs de contenus des menus interactifs, éventuellement contextuels, à leur demande et quand ils le désirent.

Elle propose à cet effet un procédé dédié à la fourniture de menus interactifs à la demande d'un terminal de communication d'utilisateur, via un réseau de communication bidirectionnel.

Ce procédé se caractérise par le fait qu'il consiste, en cas de diffusion par un terminal d'un contenu transmis par le réseau sur une voie aller :
i) à activer une fonction dédiée dans un terminal de communication (éventuellement différent de celui effectuant la diffusion) de manière à transmettre au réseau, via une voie bidirectionnelle de retour (ou back channel), une requête demandant la transmission d'un menu interactif en relation avec le contenu affiché,
ii) à réception de cette requête, à accéder à des premiers moyens de mémorisation dans lesquels sont stockées des premières données en relation avec le contenu affiché,
iii) à générer un menu interactif à partir d'au moins les premières données relatives au contenu affiché, et
iv) à transmettre ce menu interactif généré au terminal requérant via la voie de retour du réseau de sorte qu'il puisse l'afficher et que son utilisateur puisse sélectionner l'un au moins des éléments qu'il contient.

Le procédé selon l'invention peut comporter d'autres caractéristiques qui peuvent être prises séparément ou en combinaison, et notamment :
- à l'étape i) le terminal requérant peut intégrer dans la requête un identifiant représentatif du contenu affiché. En variante et lorsque le contenu est transmis en direct et en mode point-à-point au terminal requérant (qui est alors également le terminal diffuseur), on peut déterminer à l'étape ii) un identifiant représentatif du contenu transmis ;
- à l'étape i) le terminal requérant peut intégrer dans la requête un identifiant représentatif de son utilisateur. En variante et lorsque le contenu est transmis au terminal requérant (qui est alors également le terminal diffuseur) en direct et en mode point-à-point, on peut déterminer à l'étape iii) un identifiant représentatif de l'utilisateur du terminal requérant ;
   ➢ à l'étape iii) on peut accéder à des seconds moyens de mémorisation pour extraire des secondes données représentatives d'informations sur l'utilisateur désigné par l'identifiant d'utilisateur (comme par exemple son profil d'utilisateur), puis on peut générer le menu interactif à partir des premières données et compte tenu des secondes données ;
- à l'étape iii) on peut générer le menu interactif à partir des premières données et compte tenu d'une information temporelle représentative de l'instant où a été transmise la requête par rapport au contenu affiché ;
   ➢ en cas d'affichage d'un contenu transmis en direct au terminal requérant (qui est alors également le terminal diffuseur), on peut déterminer l'information temporelle à l'étape iii), celle-ci étant l'heure à laquelle la requête a été transmise par le terminal requérant ;
   ➢ en variante, le terminal requérant peut intégrer l'information temporelle dans la requête, à l'étape i). Dans ce cas, lorsque le contenu a été transmis antérieurement au terminal requérant (qui est alors également le terminal diffuseur) puis stocké dans ce dernier, l'information temporelle est représentative de la durée écoulée depuis le début de l'affichage du contenu, tandis que lorsque le contenu a été transmis en direct au terminal requérant, l'information temporelle est l'instant de génération de la requête ;
- certaines au moins des premières données peuvent être modifiées et/ou mises à jour sensiblement en direct ;
- on peut afficher sur l'écran du terminal requérant des troisièmes données représentatives de la mise à la disposition de son utilisateur d'un menu interactif pour le contenu. Par exemple, les troisièmes données sont affichées pendant un intervalle de temps précédant immédiatement le début de la diffusion du contenu ou bien pendant au moins un intervalle de temps choisi durant la diffusion du contenu ;
- il peut comprendre une étape v) dans laquelle le terminal requérant transmet un message comportant la désignation de chaque élément sélectionné par son utilisateur dans le menu, et une étape vi) dans laquelle on traite le contenu du message transmis de manière à satisfaire une demande de l'utilisateur et/ou on enregistre des informations extraites du message transmis ;
- on peut effectuer les étapes ii), iii) et vi) dans un équipement de communication (par exemple un serveur) couplé au réseau de communication.

L'invention propose également un équipement de communication, destiné à être couplé à un réseau de communication bidirectionnelle, et comprenant des moyens de traitement chargés, lorsqu'ils reçoivent une requête transmise par un terminal requérant sur une voie bidirectionnelle de retour (ou back channel) du réseau et demandant la transmission d'un menu interactif en relation avec un contenu diffusé par un terminal (éventuellement différent du terminal requérant), i) d'accéder à des premiers moyens de mémorisation dans lesquels sont stockées des premières données en relation avec le contenu diffusé, puis ii) de générer un menu interactif à partir d'au moins les premières données relatives au contenu diffusé, et iii) d'initier la transmission du menu interactif au terminal requérant via la voie de retour du réseau, de sorte qu'il puisse l'afficher et que son utilisateur puisse sélectionner l'un au moins des éléments qu'il contient.

L'équipement de communication selon l'invention peut comporter d'autres caractéristiques qui peuvent être prises séparément ou en combinaison, et notamment :
- en cas de diffusion par le terminal requérant d'un contenu transmis en direct et en mode point-à-point, ses moyens de traitement peuvent être chargés de déterminer un identifiant représentatif du contenu transmis. En variante, la requête peut directement comporter un identifiant représentatif du contenu transmis ;
- ses moyens de traitement peuvent être chargés d'accéder à des seconds moyens de mémorisation pour extraire des secondes données représentatives d'informations sur l'utilisateur désigné par un identifiant d'utilisateur, puis de générer le menu interactif à partir des premières données et compte tenu des secondes données ;
   ➢ en cas de diffusion par le terminal requérant d'un contenu transmis en direct et en mode point-à-point, ses moyens de traitement peuvent être chargés de déterminer un identifiant représentatif de l'utilisateur du terminal requérant. En variante, la requête peut directement comporter un identifiant représentatif de l'utilisateur du terminal requérant ;
- ses moyens de traitement peuvent être chargés de générer le menu interactif à partir des premières données et compte tenu d'une information temporelle représentative de l'instant où a été transmise la requête par rapport au contenu diffusé ;
   ➢ en cas de diffusion par le terminal requérant d'un contenu transmis en direct, ses moyens de traitement peuvent être chargés de déterminer l'information temporelle, celle-ci étant l'heure à laquelle la requête a été transmise par le terminal requérant. En variante, la requête peut directement comporter l'information temporelle ;
- en cas de réception d'un message transmis par le terminal requérant et comportant la désignation de chaque élément sélectionné par son utilisateur dans le menu, ses moyens de traitement peuvent être chargés de traiter le contenu du message reçu de manière à satisfaire une demande de l'utilisateur et/ou pour enregistrer des informations extraites du message reçu.

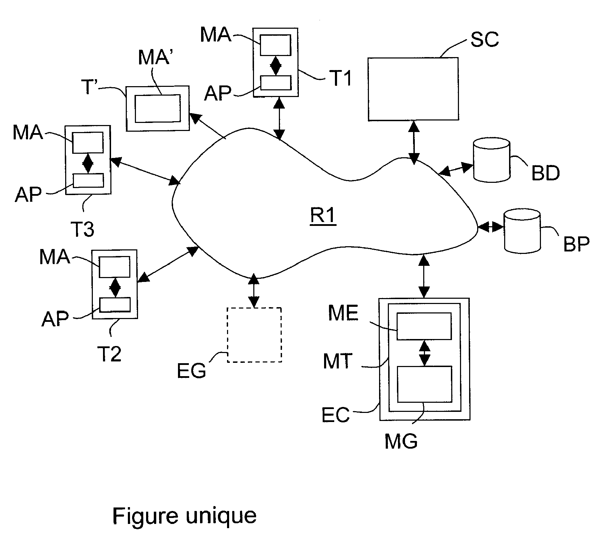

D'autres caractéristiques et avantages de l'invention apparaîtront à l'examen de la description détaillée ci-après, et du dessin annexé, sur lequel l'unique figure illustre de façon très schématique et fonctionnelle un réseau de communication auquel est couplé un serveur de contenus et un exemple de réalisation d'un équipement de communication dédié à la génération de menus interactifs à la demande de terminaux de communication. Le dessin annexé pourra non seulement servir à compléter l'invention, mais aussi contribuer à sa définition, le cas échéant.

L'invention a pour objet de permettre la fourniture en temps réel à des terminaux de communication, qui en font la demande pendant qu'ils affichent des contenus reçus via un réseau de communication, de menus interactifs en relation avec ces contenus.

Dans ce qui suit, on considère à titre d'exemple non limitatif que les terminaux de communication sont des téléphones mobiles (ou cellulaires) connectés à un réseau de téléphonie mobile (ou cellulaire), comme par exemple un réseau UMTS (ou une variante ou un équivalent de celui-ci), et capables de recevoir via ledit réseau des contenus, comme par exemple des vidéos, ou des programmes de télévision, ou encore des programmes radiophoniques. Mais, l'invention n'est pas limitée à ce type de terminal de communication. Elle concerne en effet tous les types de terminal de communication, tous les types de réseau et tous les types de contenu définis dans la partie introductive.

L'invention est en effet indépendante du type de contenu diffusé et seuls les détails de sa mise en oeuvre dépendent du mode de transmission des contenus.

On a représenté sur l'unique figure un réseau (de communication) R1 auquel sont connectés des terminaux de communication Ti (ici i = 1 à 3, mais il peut prendre n'importe quelle valeur non nulle), ainsi qu'éventuellement au moins un terminal de diffusion de contenus T' (comme par exemple un téléviseur ou un lecteur MP3).

L'invention propose un procédé permettant en cas de diffusion par un terminal d'un contenu transmis par un réseau (de communication bidirectionnelle) R1, sur une voie dite « aller », de fournir à un terminal de communication Ti, qui appartient à un client de ce réseau R1 et qui est soit également le terminal diffuseur soit différent du terminal diffuseur T' mais situé dans son environnement immédiat, à sa demande et via ledit réseau R1, un menu interactif relatif à ce contenu. Le contenu est transmis par un serveur de contenus SC appartenant à un diffuseur de contenus qui n'est pas forcément l'opérateur du réseau R1.

Ce procédé comporte au moins quatre étapes.

La première étape consiste à activer, à la demande d'un utilisateur, une fonction dédiée dans un terminal de communication, par exemple T1, éventuellement différent de celui qui effectue la diffusion d'un contenu transmis par le réseau R1 sur une voie aller, afin de transmettre au réseau R1, via une voie bidirectionnelle dite « de retour » (ou back channel »), une requête demandant la transmission d'un menu interactif en relation avec le contenu affiché.

Il est important de noter que l'invention s'applique à une première situation dans laquelle un terminal de diffusion T' reçoit ou a reçu un contenu qu'il diffuse à un instant donné et un terminal de communication Ti, dit requérant et voisin du terminal de diffusion T', génère des requêtes en relation avec le contenu diffusé par le terminal de diffusion, ainsi qu'à une seconde situation dans laquelle un terminal de communication Ti reçoit ou a reçu un contenu qu'il diffuse à un instant donné et génère des requêtes en relation avec le contenu qu'il diffuse. Seul un terminal de communication Ti, qui assure éventuellement et également la diffusion de contenus, peut générer des requêtes et donc être qualifié de terminal requérant.

Par ailleurs, il est également important de noter que le contenu diffusé peut être de type sonore et/ou visuel (programme de télévision, vidéo, données). Dans ce qui suit, on considère à titre d'exemple non limitatif que le contenu diffusé est de type visuel, par conséquent, le contenu est diffusé par affichage sur un écran MA dans le cas d'un terminal de communication Ti ou un écran MA' dans le cas d'un terminal de diffusion T'.

L'activation peut se faire à n'importe quel moment, à l'initiative de l'utilisateur du terminal requérant T1, dès lors que le contenu est en cours d'affichage sur l'écran MA du terminal requérant T1 ou sur l'écran MA' du terminal de diffusion T'.

Il est important de noter que l'affichage d'un contenu sur l'écran du terminal peut se faire aussi bien en direct, c'est-à-dire en même temps que le réseau diffuse le contenu, qu'en différé, c'est-à-dire une fois qu'il a été transmis par le réseau R1 puis stocké dans une mémoire du terminal Ti ou T'.

Pour permettre cette activation un terminal requérant Ti doit être équipé d'une application AT dédiée à la fourniture de menus interactifs. Celle-ci se présente de préférence sous la forme d'un module logiciel, qui peut être éventuellement téléchargé à la demande de l'utilisateur ou par l'opérateur du réseau R1, ou qui est implanté lors de la fabrication du terminal requérant Ti, par exemple à l'intérieur du lecteur de média (dont il fait alors partie intégrante).

Cette application dédiée AP est contrôlée par une touche du terminal requérant Ti ou par sélection d'un élément d'un menu ou sous-menu ou encore par une commande vocale.

Lorsque l'application dédiée AP est activée, elle génère une requête demandant la transmission d'un menu interactif en relation avec le contenu qui est en train d'être affiché sur l'écran MA du terminal requérant Ti ou de l'écran MA' du terminal de diffusion T'.

L'application dédiée AP peut intégrer dans cette requête un identifiant représentatif du contenu en cours d'affichage. Cela est obligatoire lorsque le contenu est affiché en différé, c'est-à-dire après avoir été transmis au terminal requérant Ti puis stocké dans ce dernier, ou bien lorsque plusieurs contenus sont transmis simultanément en mode diffusion (ou broadcast) ou point-à-multipoints (ou multicast). Dans toutes les autres situations, il ne s'agit que d'une option, étant donné qu'il est possible de déterminer auprès du diffuseur de contenus l'identifiant du contenu diffusé et donc en cours d'affichage. Lorsque le contenu est diffusé par le terminal de diffusion T', c'est l'utilisateur du terminal de communication requérant Ti qui doit indiquer à l'application dédiée un identifiant représentatif du contenu en cours d'affichage.

L'application dédiée AP peut également intégrer dans la requête un identifiant représentatif de l'utilisateur du terminal requérant Ti dans lequel elle est implantée. Cela est obligatoire lorsque le contenu est affiché en différé, ou bien lorsque le contenu est transmis en mode diffusion (ou broadcast) ou point-à-multipoints (ou multicast), ou encore lorsque le contenu est diffusé par le terminal de diffusion T' et non par le terminal requérant Ti. Dans toutes les autres situations, il ne s'agit que d'une option, étant donné qu'il est possible de déterminer auprès du réseau R1 l'identifiant de l'utilisateur du terminal requérant Ti qui transmet la requête via l'une de ses voies de retour (ou back channels).

L'application dédiée AP peut également intégrer dans la requête une information temporelle représentative de l'instant où elle a été transmise par rapport au contenu en cours d'affichage. Dans certains modes de mise en oeuvre de l'invention sur lesquels on reviendra plus loin, lorsque le contenu est affiché en différé, cette intégration est nécessaire étant donné qu'un équipement distant ne peut pas déterminer combien de temps s'est écoulé depuis le début de la diffusion du contenu sur l'écran MA du terminal requérant Ti ou sur l'écran MA' du terminal de diffusion T'. Dans ce cas, l'information temporelle représente par exemple la durée écoulée depuis le début de la diffusion. Dans toutes les autres situations, il ne s'agit que d'une option, étant donné qu'il est possible de déterminer l'instant de génération de la requête qui correspond sensiblement à la portion de contenu qui est en cours d'affichage.

Chaque requête est destinée à être traitée par un équipement de communication EC qui est couplé au réseau R1 (mais qui n'en fait pas obligatoirement partie) et qui dispose d'une adresse. Cet équipement de communication EC peut par exemple se présenter sous la forme d'un serveur d'application.

Il est important de noter que l'on peut prévoir plusieurs équipements de communication EC dédiés chacun à un type de contenu ou bien à un diffuseur de contenus. On peut en effet envisager qu'un premier équipement de communication soit dédié au traitement des requêtes relatives à des contenus de type vidéo, qu'un second équipement de communication soit dédié au traitement des requêtes relatives à des contenus de type programmes de télévision, et qu'un troisième équipement de communication soit dédié au traitement des requêtes relatives à des contenus de type programmes audio ou radiophoniques.

Lorsque plusieurs équipements de communication EC sont couplés au réseau R1, mais que les applications AP implantées dans les terminaux requérants Ti ne disposent que d'une seule adresse pour transmettre leurs requêtes, on peut prévoir un équipement de communication complémentaire EG, chargé de collecter toutes les requêtes, et de les analyser afin de déterminer l'équipement de communication EC qui doit traiter chacune d'entre elles.

La deuxième étape commence lorsqu'un équipement de communication EC reçoit une requête en provenance d'un terminal requérant Ti.

Cette deuxième étape consiste à accéder à des premiers moyens de mémorisation BD, dans lesquels sont stockées des premières données en relation avec tous les contenus traités par l'équipement de communication EC destinataire de la requête, afin d'en extraire toutes les premières données relatives au contenu affiché par le terminal requérant Ti (ou le terminal de diffusion T').

Pour ce faire, chaque équipement de communication EC dispose d'un module de traitement MT chargé de traiter les requêtes qu'il reçoit. Plus précisément, le module de traitement MT doit tout d'abord déterminer l'identifiant du contenu objet de la requête reçue. Comme indiqué précédemment, cet identifiant de contenu peut faire partie de la requête. Dans le cas contraire, le module de traitement MT doit le déterminer auprès du diffuseur de contenus (ce qui n'est possible que lorsque le terminal requérant est également celui qui diffuse le contenu).

Une fois que le module de traitement MT dispose de l'identifiant du contenu, il charge un module d'extraction ME, qu'il comprend, d'accéder aux premiers moyens de mémorisation BD afin d'en extraire les premières données relatives au contenu identifié.

Il est important de noter que les premiers moyens de mémorisation BD ne font pas forcément partie de l'équipement de communication EC. C'est notamment le cas dans l'exemple illustré sur l'unique figure. Ils comprennent en effet des informations qui sont fournies, modifiées et mises à jour par le ou les diffuseurs de contenus. Par conséquent, les premiers moyens de mémorisation BD peuvent être implantés dans un équipement d'un diffuseur de contenus, par exemple dans son serveur de contenus SC. Ce qui est important c'est qu'ils soient accessibles à l'équipement de communication EC via le réseau R1.

Ces premiers moyens de mémorisation BD peuvent se présenter sous n'importe quelle forme, et notamment sous la forme d'une mémoire ou d'une base de données.

Par ailleurs, les premières données peuvent être de tout type dès lors qu'elles ont une relation, même lointaine, avec les contenus diffusés, pour leur diffuseur. Par exemple dans le cas d'un programme sportif, tel qu'un match de football, les premières données peuvent être des renseignements relatifs aux joueurs et à l'entraîneur, des tactiques habituellement utilisées par l'entraîneur, ou des informations sur les clubs en présence (ainsi qu'éventuellement tous les autres clubs du même championnat ou de championnats étrangers), et notamment sur leurs palmarès respectifs, leurs résultats respectifs depuis le début de la saison, leur(s) prochain(s) match(s). En outre, lorsque les premières données peuvent être modifiées et/ou mises à jour, elles peuvent consister en des images de séquences qui viennent de se dérouler, afin de proposer des ralentis.

Lorsque les contenus sont de type musical, les premières données peuvent par exemple être des renseignements relatifs aux orchestres, chanteurs ou groupes dont les oeuvres sont diffusées par le diffuseur de contenus, et notamment leurs discographies ou les dates et lieux de leurs prochains concerts, ou les modalités de téléchargement payant de l'une au moins de leurs oeuvres enregistrées.

Une fois que le module d'extraction MC a extrait toutes les premières données relatives au contenu objet de la requête, il les communique, par exemple, à un module de génération MG du module de traitement MT chargé de mettre en oeuvre la troisième étape du procédé selon l'invention.

Cette troisième étape consiste à générer un menu interactif à partir d'au moins les premières données relatives au contenu affiché (extraites des premiers moyens de mémorisation BD).

Dans cette troisième étape, le module de génération MG construit un menu interactif à l'attention du terminal requérant Ti qui a transmis la requête, à partir des premières données relatives au contenu en cours d'affichage sur son écran MA (ou sur l'écran MA' du terminal de diffusion T' voisin).

Lorsque le module de traitement MT dispose de l'information temporelle représentative de l'instant où la requête a été transmise par rapport au contenu en cours d'affichage, son module de génération MG peut affiner ou compléter le menu interactif. Dans ce cas, il peut en effet intégrer dans le menu interactif un ou plusieurs éléments en relation avec la portion de contenu qui vient d'être affichée sur l'écran MA du terminal Ti requérant (ou sur l'écran MA' du terminal de diffusion T' voisin). Le menu interactif devient alors de type contextuel. Dans l'exemple précité d'un programme sportif, on peut ainsi proposer dans le menu un ou plusieurs ralentis sur une action qui vient de se dérouler (ou d'être affichée), et sous un ou plusieurs angles différents, par exemple.

Comme indiqué précédemment, l'information temporelle est soit contenue dans la requête, soit déterminée par le module de traitement MT au moyen d'une horloge synchronisée par rapport au serveur de contenus SC du diffuseur de contenus. Dans ce dernier cas, il identifie la date de réception de la requête à la date de génération de la requête.

Bien entendu, pour que l'on puisse utiliser l'information temporelle il faut que des secondes données soient stockées en correspondance d'un horaire (et éventuellement d'une date).

Lorsque le module de traitement MT dispose de l'identifiant de l'utilisateur du terminal requérant Ti qui a transmis la requête, son module de génération MG peut avantageusement construire un menu interactif personnalisé (ou contextuel) en fonction de secondes données représentatives d'informations sur cet utilisateur. Ces secondes données sont stockées dans des seconds moyens de mémorisation BP, couplés au réseau R1. Il s'agit par exemple de profils (ou portions de profils) d'utilisateurs stockés en correspondance de leurs identifiants d'utilisateur.

Il est important de noter que les seconds moyens de mémorisation BP ne font pas forcément partie de l'équipement de communication EC. C'est notamment le cas dans l'exemple illustré sur l'unique figure. Ils comprennent en effet des informations qui sont fournies, modifiées et mises à jour par le ou les diffuseurs de contenus ou bien par l'opérateur du réseau R1 lorsqu'ils en sont clients (ce qui n'est pas obligatoire). Par conséquent, les seconds moyens de mémorisation BP peuvent être implantés dans un équipement d'un diffuseur de contenus (par exemple dans son serveur de contenus SC) ou d'un opérateur de réseau. Ce qui est important c'est qu'ils soient accessibles à l'équipement de communication EC via le réseau R1.

Ces seconds moyens de mémorisation BP peuvent se présenter sous n'importe quelle forme, et notamment sous la forme d'une mémoire ou d'une base de données.

Par ailleurs, les secondes données peuvent être de tout type dès lors qu'elles ont une relation, même lointaine, avec l'utilisateur du terminal requérant Ti. Ainsi, il peut par exemple s'agir de la classe d'age, du sexe, des préférences de type de programme, des goûts, des centres d'intérêt, des loisirs, des tranches horaires d'observation des programmes, et d'une manière générale de tout ce qui peut permettre de personnaliser un utilisateur. Ces informations sur les utilisateurs sont généralement utilisées par les diffuseurs de contenus, notamment pour affiner des analyses d'audience ou de taux d'audience.

On notera qu'un élément du menu interactif contextuel peut éventuellement faire appel à un sous-menu destiné à proposer à l'utilisateur du terminal requérant Ti des actions qui sont indirectement liées au contenu qu'il regarde (ou écoute). Ainsi, un sous-menu peut mettre à la disposition d'un utilisateur des informations de type communautaire, comme par exemple une liste d'amis qui regardent le même contenu que lui et en même temps, ou bien une liste d'amis qui sont situés dans la même zone géographique que lui, ou encore une possibilité d'engager une fenêtre de dialogue en temps réel (ou « chat ») avec des amis.

Bien entendu, pour que l'on puisse effectuer ce type de proposition, il faut que le profil de l'utilisateur (ou secondes données) le permette et que les identifiants de ses amis soient stockés sous la forme de secondes données. Il faut également que l'équipement de communication EC soit autorisé à accéder à des informations complémentaires contenues dans les coeurs de réseau, comme par exemple les positions géographiques des terminaux d'utilisateurs.

Comme indiqué précédemment, l'identifiant de l'utilisateur du terminal requérant Ti est soit contenu dans la requête, soit déterminé par le module de traitement MT auprès du réseau R1. Dans ce dernier cas, le réseau R1 connaît l'identifiant de communication du terminal requérant Ti du fait qu'il a transmis sa requête via l'une de ses voies de retour. Il est donc relativement facile d'en déduire l'identifiant de l'utilisateur du terminal requérant Ti, notamment s'il s'agit du même identifiant que celui dudit terminal requérant Ti.

Une fois que le module de traitement MT dispose du menu interactif (éventuellement contextuel, c'est-à-dire personnalisé et/ou affiné temporellement), il initie sa transmission par le réseau R1, sous la forme d'un message à destination du terminal requérant Ti. Cette transmission constitue la quatrième étape du procédé selon l'invention.

Lorsque le terminal requérant Ti reçoit le message du réseau R1, via la voie de retour (ou back channel) précédemment utilisée pour transmettre la requête (c'est-à-dire le même canal), il la transmet à son application dédiée AP. Celle-ci extrait le menu interactif du message et ordonne aux moyens d'affichage de son terminal requérant Ti de l'afficher sur l'écran MA, par exemple en surimpression du contenu qui est en cours d'affichage.

L'utilisateur du terminal requérant Ti peut alors, s'il le souhaite, sélectionner l'un au moins des éléments contenus dans le menu interactif affiché sur l'écran MA.

Le procédé peut ensuite se poursuivre par une cinquième étape dans laquelle l'application dédiée AP génère un message comportant la désignation de chaque élément sélectionné dans le menu interactif par l'utilisateur du terminal requérant Ti, puis ordonne audit terminal requérant Ti de transmettre ce message à destination de l'équipement de communication EC qui lui a transmis le menu interactif, via la voie de retour précédemment utilisée.

Lorsque l'équipement de communication EC reçoit le message du terminal requérant Ti, via le réseau R1, son module de traitement MT en extrait le contenu afin de le traiter. Cela constitue l'éventuelle sixième étape du procédé selon l'invention.

Plus précisément, le module de traitement MT détermine si l'utilisateur a effectué une demande particulière (en rapport avec les éléments contenus dans le menu interactif), et si c'est le cas il effectue les opérations qui vont permettre de satisfaire à sa demande. Ces opérations consistent par exemple à transmettre des informations spécifiques en rapport avec le contenu affiché, ou bien à établir une connexion avec un autre serveur, par exemple chargé de transmettre un enregistrement musical ou bien dédié au paiement d'un achat. Le module de traitement MT peut également enregistrer des informations extraites du message transmis dans une mémoire (non représentée, et qui ne fait pas forcément partie de son équipement de communication EC). Ces informations sont par exemple celles qui sont utiles aux diffuseurs de contenus pour effectuer ou affiner des analyses d'audience ou de taux d'audience.

Le module de traitement MT de chaque équipement de communication EC selon l'invention peut être réalisé sous la forme de circuits électroniques, de modules logiciels (ou informatiques), ou d'une combinaison de circuits et de logiciels.

On notera que pour familiariser l'utilisateur avec l'interactivité, l'application dédiée AP peut être agencée de manière à faire afficher sur l'écran MA de son terminal requérant Ti, par exemple en surimpression, des troisièmes données représentatives de la mise à disposition d'un menu interactif en relation avec un contenu. Par exemple, ces troisièmes données peuvent être affichées pendant un intervalle de temps qui précède immédiatement le début de l'affichage du contenu sur l'écran MA ou bien pendant un ou plusieurs intervalles de temps choisis durant l'affichage du contenu.

Ces troisièmes données constituent par exemple un message textuel ou sonore et/ou un logo.

L'invention offre un certains nombres d'avantages, parmi lesquels :
- elle permet de ne pas avoir à adjoindre des données de menu aux données de contenu,
- elle permet de fournir à l'utilisateur d'un terminal de communication, qui regarde un contenu affiché par un terminal de diffusion (comme par exemple un téléviseur, éventuellement installé dans un lieu public), un menu en relation avec ledit contenu affiché, sans que cela ne perturbe les autres personnes qui regardent éventuellement ledit contenu sur le même terminal de diffusion,
- elle permet aux utilisateurs d'accéder quand ils le souhaitent aux menus interactifs,
- elle offre une indépendance vis-à-vis des modes de transmission,
- elle permet de mettre de nouveaux services et de nouvelles applications à la disposition des utilisateurs,
- elle concerne aussi bien les réseaux de communication fixe que les réseaux de communication mobile (ou cellulaire),
- elle permet de prendre en compte les informations contextuelles (profils des utilisateurs et/ou informations liées au temps).

L'invention ne se limite pas aux modes de réalisation de procédé de fourniture de menus interactifs et d'équipement de communication décrits ci-avant, seulement à titre d'exemple, mais elle englobe toutes les variantes que pourra envisager l'homme de l'art dans le cadre des revendications ci-après.

## Revendications

1. Procédé de fourniture de menus interactifs à la demande d'un terminal de communication d'utilisateur (Ti), via un réseau de communication bidirectionnelle (R1), dans lequel, en cas de diffusion par un terminal (Ti, T') d'un contenu transmis par ledit réseau (R1) sur une voie aller, i) on active une fonction dédiée dans un terminal de communication (Ti) de manière à transmettre audit réseau (R1), via une voie bidirectionnelle de retour, une requête demandant la transmission d'une information en relation avec ledit contenu diffusé, ii) à réception de ladite requête, on accède à des premiers moyens de mémorisation (BD) dans lesquels sont stockées des premières données en relation avec ledit contenu diffusé, **caractérisé en ce que** l'information demandée est un menu interactif et **en ce que** iii) on génère un menu interactif à partir d'au moins lesdites premières données relatives audit contenu diffusé, et iv) on transmet, pendant la diffusion du contenu, ledit menu interactif généré audit terminal requérant (Ti) via ladite voie de retour du réseau (R1) de sorte qu'il puisse l'afficher et que son utilisateur puisse sélectionner l'un au moins des éléments qu'il contient.

2. Procédé selon la revendication 1, **caractérisé en ce qu'**au i) ledit terminal requérant (Ti) intègre dans ladite requête un identifiant représentatif du contenu diffusé.

3. Procédé selon la revendication 1, **caractérisé en ce que** ledit terminal requérant (Ti) est ledit terminal diffuseur, et **en ce qu'**en cas de diffusion d'un contenu transmis audit terminal requérant (Ti) en direct et en mode point-à-point, on détermine au ii) un identifiant représentatif du contenu transmis.

4. Procédé selon la revendication 3, **caractérisé en ce qu'**un identifiant représentatif de l'utilisateur du terminal requérant (Ti) est déterminé et iii) on accède à des seconds moyens de mémorisation (BP) pour extraire des secondes données représentatives d'informations sur l'utilisateur désigné par ledit identifiant d'utilisateur, puis on génère ledit menu interactif à partir desdites premières données et compte tenu desdites secondes données.

5. Procédé selon la revendication 4, **caractérisé en ce que** lesdites secondes données sont représentatives de profils d'utilisateurs.

6. Procédé selon la revendication 5, **caractérisé en ce qu'**au iii) on génère ledit menu interactif à partir desdites premières données et compte tenu d'une information temporelle représentative de l'instant où a été transmise ladite requête par rapport audit contenu diffusé.

7. Procédé selon la revendication 6, **caractérisé en ce que** ledit terminal requérant (Ti) est ledit terminal diffuseur, et **en ce qu'**en cas de diffusion d'un contenu transmis audit terminal requérant (Ti) en direct, on détermine au iii) ladite information temporelle, celle-ci étant l'heure à laquelle ladite requête a été transmise par ledit terminal requérant (Ti).

8. Procédé selon l'une des revendications 1 à 7, **caractérisé en ce que** l'on affiche sur un écran (MA) dudit terminal requérant (Ti) des troisièmes données représentatives de la mise à la disposition de son utilisateur d'un menu interactif pour ledit contenu.

9. Procédé selon la revendication 8, **caractérisé en ce que** lesdites troisièmes données sont affichées pendant un intervalle de temps précédent immédiatement le début de la diffusion dudit contenu.

10. Procédé selon la revendication 9, **caractérisé en ce que** lesdites troisièmes données sont affichées pendant au moins un intervalle de temps choisi durant la diffusion dudit contenu.

11. Procédé l'une des revendications 1 à 10, **caractérisé en ce qu'**il comprend une étape v) dans laquelle ledit terminal requérant (Ti) transmet un message comportant la désignation de chaque élément sélectionné par son utilisateur dans ledit menu, et une étape vi) dans laquelle on traite le contenu dudit message transmis de manière à satisfaire une demande dudit utilisateur et/ou on enregistre des informations extraites dudit message transmis.

12. Procédé selon l'une des revendications 1 à 11, **caractérisé en ce qu'**on effectue les étapes ii), iii) et vi) dans un serveur (EC) couplé audit réseau de communication (R1).

13. Equipement de communication (EC), propre à être couplé à un réseau de communication bidirectionnelle (R1), **caractérisé en ce qu'**il comprend des moyens de traitement (MT) agencés, en cas de réception d'une requête transmise par un terminal requérant (Ti) sur une voie bidirectionnelle de retour du réseau (R1) et demandant la transmission d'un menu interactif en relation avec un contenu diffusé par un terminal (Ti, T'), i) pour accéder à des premiers moyens de mémorisation (BD) dans lesquels sont stockées des premières données en relation avec ledit contenu diffusé, puis ii) pour générer un menu interactif à partir d'au moins lesdites premières données relatives audit contenu diffusé, et iii) pour initier la transmission dudit menu interactif audit terminal requérant (Ti) via ladite voie de retour du réseau (R1), de sorte qu'il puisse l'afficher et que son utilisateur puisse sélectionner l'un au moins des éléments qu'il contient.

14. Equipement selon la revendication 13, **caractérisé en ce que** lesdits moyens de traitement (MT) sont agencés, en cas de diffusion par ledit terminal requérant (Ti) d'un contenu transmis en direct et en mode point-à-point, pour déterminer un identifiant représentatif du contenu transmis.

15. Equipement selon la revendication 13, **caractérisé en ce que** ladite requête comporte un identifiant représentatif du contenu transmis.

16. Equipement selon l'une des revendications 13 à 15, **caractérisé en ce que** lesdits moyens de traitement (MT) sont agencés pour accéder à des seconds moyens de mémorisation (BP) pour extraire des secondes données représentatives d'informations sur l'utilisateur désigné par un identifiant d'utilisateur, puis pour générer ledit menu interactif à partir desdites premières données et compte tenu desdites secondes données.

17. Equipement selon l'une des revendications 13 à 16, **caractérisé en ce que** lesdits moyens de traitement (MT) sont agencés pour générer ledit menu interactif à partir desdites premières données et compte tenu d'une information temporelle représentative de l'instant où a été transmise ladite requête par rapport audit contenu affiché.

18. Equipement selon l'une des revendications 13 à 17, **caractérisé en ce que** lesdits moyens de traitement (MT) sont agencés, en cas de réception d'un message transmis par ledit terminal requérant (Ti) et comportant la désignation de chaque élément sélectionné par son utilisateur dans ledit menu, pour traiter le contenu dudit message reçu de manière à satisfaire une demande dudit utilisateur et/ou pour enregistrer des informations extraites dudit message reçu.
